# EUROPÄISCHE PATENTSCHRIFT

(11) **EP 1 484 541 B1**
(45) Veröffentlichungstag und Bekanntmachung des Hinweises auf die Patenterteilung: **26.10.2005**
(21) Anmeldenummer: 04007892.5
(22) Anmeldetag: 01.04.2004
(51) Int. Cl.: F16L 5/08, H02G 3/22

(54) **Vorrichtung zur Abdichtung in Wanddurchbrüchen mit einer elektromagnetischen Abschirmung**
Sealing device for wall lead-throughs with electromagnetical shielding
Dispositif d'étanchéité pour traversées de paroi avec blindage éléctromagnetique

(30) Priorität: 06.06.2003 DE 10325732
(43) Veröffentlichungstag der Anmeldung: 08.12.2004
(73) Patentinhaber: GK-System GmbH, 22926 Ahrensburg (DE)
(72) Erfinder: Gutjahr, Bernd, 21640 Horneburg (DE)
(74) Vertreter: Hansmann, Dierk

(56) Entgegenhaltungen:
- DE-A- 19 602 760
- US-A- 4 677 253
- US-A- 5 493 068

## Beschreibung

Die Erfindung bezieht sich eine Vorrichtung zur Abdichtung von eingesetzten Kabeln, Leitungen bzw. Rohren in Wanddurchbrüchen, insbesondere bei Schotte und Decks auf Schiffen, mit einer elektromagnetischen Abschirmung, bestehend aus zwischen den Kabeln, Leitungen bzw. Rohren und einem ortsfesten Rahmen baukastenartig durch über- und/oder nebeneinanderliegenden ganz oder teilweise elastischen Paßstücken mit elektrisch leitfähigen Ausbildungen und einer einstellbaren Klemmvorrichtung, durch die ein in der Rahmenebene wirkender Druck einstellbar ist, der die einzelnen Elemente dichtend in dem Rahmen hält, wobei die Klemmeinrichtung durch im Abstand verstellbare Druckelemente gebildet ist, die in der Rahmenebene über quer zur Rahmenebene beidseitig entlang korrespondierender Führungsflächen der Druckelemente durch Spannelemente, wie beispielsweise Schrauben, einstellbare Keilelemente verstellbar sind.

Eine Vorrichtung mit einer einstellbaren Klemmeinrichtung ist beispielsweise aus der DE 196 02 760 C2 bekannt, wobei durch eine Abtrennung bestimmte wasser- und gasdichtende Funktionen und flammhemmende Funktionen übernommen werden.

Zur elektromagnetischen Abschirmung und für eine Ableitung von Störeinleitungen, hervorgerufen von elektrischen, magnetischen und/oder elektromagnetischen Feldern mit einem potentialfreien Erdkontakt über einen ortsfesten Rahmen ist auch gemäß der EP 0 590 410 B1 bekannt, wobei im wesentlichen entsprechende Metallkissen angeordnet sind, die zur Kontaktierung von Schirmgeflechten auf Kabel eingesetzt sind.

Dokument US4677253 zeigt eine Vorrichtunggemäß dem Oberbegriff des Anspruchs 1.

Durch die einstellbare Klemmvorrichtung besteht aber der Mangel, daß die Abschirmung in einem entstehenden zentralen Bereich zwischen den Druck- und Spannelementen die Abschirmung unterbrochen ist und somit keine Abschirmung besteht.

Die Aufgabe der Erfindung ist es, eine durchgehende Abschirmung über die gesamte Rahmenebene unter Berücksichtigung der entstehenden Größenveränderungen bei der Einstellung der Klemmvorrichtung durchzuführen.

Die Lösung dieser Aufgabe erfolgt erfindungsgemäß dadurch, daß zwischen den Keilelementen ein elektrisch leitfähiges Abschirmmaterial in der Rahmenebene angeordnet ist, das über aufgetrennte Druckelemente nach außen unter Bildung von Kontaktflächen geführt ist und das eingesetzte Abschirmmaterial zur Bildung einer elektromagnetischen Abschirmung in seiner Materialausdehnung mindestens entsprechend dem Abstand zwischen den Druckelementen in der Spannposition bemessen und der erforderliche Materialüberschuß in der Ausgangsposition in einem Aufnahmebereich zwischen Druck- und Keilelementen aufgenommen ist.

Hierdurch ist es möglich, eine funktionsfähige Anordnung für eine Abschirmung zu schaffen, die unabhängig von der Einstellung der Druckelemente einen potentialfreien Erdkontakt ermöglicht.

Eine einfache Ausbildung besteht darin, daß das Abschirmmaterial durch eine elektrisch leitende Folie gebildet ist.

Alternativ wird vorgeschlagen, daß das Abschirmmaterial durch eine nicht leitende Folie mit einer elektrisch leitenden Beschichtung gebildet ist.

Eine günstige Ausgestaltung zur sicheren Aufnahme und Entfaltung im Aufnahmebereich wird dadurch geschaffen, daß das Abschirmmaterial mindestens im Aufnahmebereich ziehharmonikaartig gefaltet ist.

Ferner ist vorgesehen, daß der mittige Bereich des Abschirmmaterials als Steg zur Durchführung der Spannelemente ausgebildet ist.

Zur Anordnung des Abschirmmaterials ist vorgesehen, daß die Teilelemente jedes Druckelementes zur Aufnahme des Abschirmmaterials über Führungsstifte einander zugeordnet sind.

Alternativ wird vorgeschlagen, daß die Teilelemente des Druckelementes unter Einschluß des Abschirmmaterials über eine Klebeverbindung miteinander verbindbar sind.

Eine einfache, nach außen geführte Kontaktfläche wird dadurch geschaffen, daß die außenliegende Kontaktfläche der Druckelemente durch das Abschirmmaterial durch einseitige oder beidseitige Abwinklungen gebildet ist.

Um eine Verbesserung für einen seitlichen Kontakt durchzuführen, wird vorgeschlagen, daß das Abschirmmaterial zusätzlich seitlich über die Druckelemente hinausgeht.

In der Zeichnung ist ein Ausführungsbeispiel schematisch dargestellt. Es zeigen:

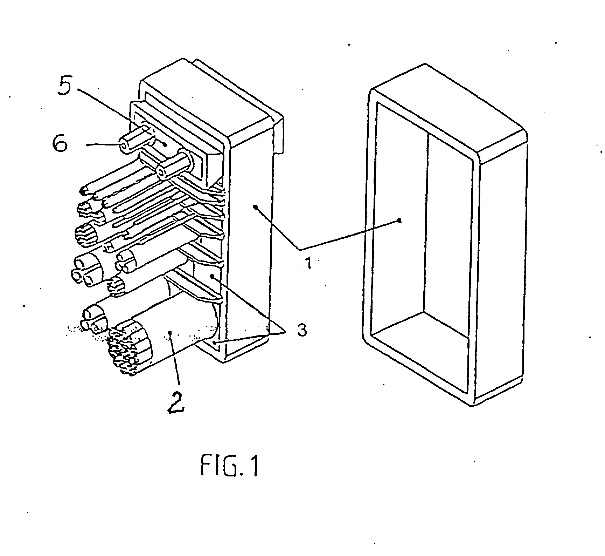

- Fig. 1: eine Darstellung eines prinzipiellen Aufbaues einer Anordnung in einem Rahmen,

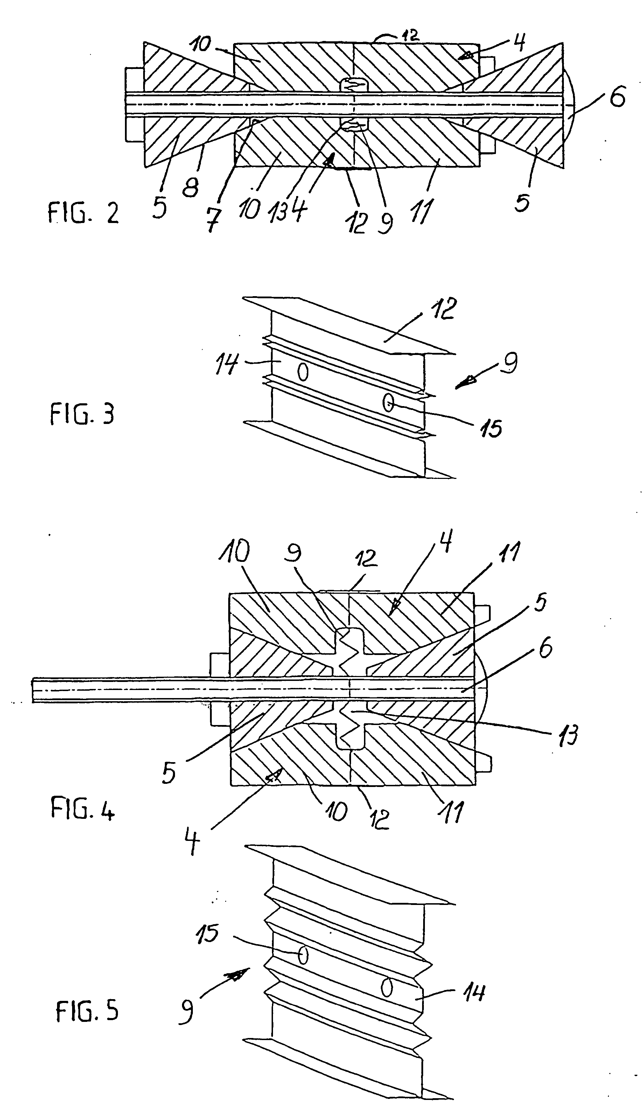

- Fig. 2: eine Schnittdarstellung einer Klemmvorrichtung in der Ausgangsposition,
- Fig. 3: eine Abschirmfolie in vergrößerter Darstellung gemäß Fig. 2,
- Fig. 4: eine Darstellung gemäß Fig. 2 in der Spannposition.
- Fig. 5: eine Abschirmfolie in vergrößerter Darstellung gemäß Fig. 4,

Bei der dargestellten Ausbildung sind in einem Rahmen 1 eines wanddurchbruches Kabel, Leitungen bzw. Rohre 2 in Öffnungen elastische Paßstücke 3 einsetzbar, wobei die Paßstücke 3 baukastenartig über- und nebeneinander den Rahmen 1 ausfüllen.

Oberhalb der Paßstücke 3 sind zwei verstellbare Druckelemente 4 angeordnet, die durch zugeordnete beidseitige Keilelemente 5 über Schrauben 6 als Spannelement gegeneinander verstellbar sind und damit in der Rahmenebene einen Druck auf die eingesetzten Paßstücke 3 ausüben. Hierzu besitzen die Druckelemente 4 korrespondierende Führungsflächen 7 zu den Keilflächen 8 der trapezförmig ausgebildeten Keilelemente 5.

Zur Abschirmung ist in der Rahmenebene innerhalb der Spanneinrichtung aus Druckelementen 4 und Keilelementen 5 eine Abschirmfolie 9 angeordnet. Hierzu sind die Druckelemente 4 jeweils zur Aufnahme der Abschirmfolie 9 durch zwei Teilelemente 10,11 gebildet, wobei die Abschirmfolie 9 an der Außenseite eine Kontaktfläche 12 bildet, die durch beidseitige Abwinklungen gebildet sind.

Im Zentrum zwischen den Druck- und Keilelementen 4,5 wird eine Aufnahme 13 gebildet, um auch in der Ausgangsposition das für die Spannposition erforderliche Material der Abschirmfolie 9 aufzunehmen.

In dieser Ausbildung ist die Abschirmfolie 9 ziehharmonikaförmig gefaltet und wird in der Spannposition entsprechend auseinandergezogen. Hierdurch wird ermöglicht, daß in jeder Lage eine durchgehende Abschirmung erfolgt. Selbstverständlich ist es auch möglich, die Abschirmfolie 9 entsprechend anders zur Materialanhäufung in der Ausgangsposition anzuordnen.

Die Teilelemente 10,11 des Druckelementes 4 können über Führungsstifte einander zugeordnet, die durch die Abschirmfolie 9 durch entsprechende Löcher geführt sind. Hierbei ist es auch möglich, eine Zuordnung über eine Klebeverbindung vorzunehmen bzw. eine andere Zuordnung zu wählen.

Zweckmäßigerweise ist die Abschirmfolie 9 im mittigen Bereich zur Aufnahme der Spannelemente 6 als Steg 14 ausgebildet und besitzt hierfür entsprechende Durchführungen 15.

## Patentansprüche

1. Vorrichtung zur Abdichtung von eingesetzten Kabeln, Leitungen bzw. Rohren in Wanddurchbrüchen, insbesondere bei Schotte und Decks auf Schiffen, mit einer elektromagnetischen Abschirmung, bestehend aus zwischen den Kabeln, Leitungen bzw. Rohren und einem ortsfesten Rahmen baukastenartig durch über- und/oder nebeneinanderliegenden ganz oder teilweise elastischen Paßstücken mit elektrisch leitfähigen Ausbildungen und einer einstellbaren Klemmvorrichtung, durch die ein in der Rahmenebene wirkender Druck einstellbar ist, der die einzelnen Elemente dichtend in dem Rahmen hält, **dadurch gekennzeichnet, dass** die Klemmeinrichtung Druck-, Keil- und Spannelemente, z.B. Schrauben, (4, 5, 6) umfaßt, wobei der Abstand der Druckelemente (4) in der Rahmenebene durch senkrecht zu diesem Abstand durch die Spannelemente (6) einstellbaren Keilelemente (5) über korrespondierende Führungsflächen (7) verstellbar ist, und zwischen den Keilelementen (5) ein elektrisch leitfähiges Abschirmmaterial (9) in der Rahmenebene angeordnet ist, das über aufgetrennte Druckelemente nach außen unter Bildung von Kontaktflächen (12) an den Außenseiten der Druckelemente geführt ist und wobei das eingesetzte Abschirmmaterial (9) zur Bildung einer elektromagnetischen Abschirmung in seiner Materialausdehnung der Ausdehnung der Druckelemente in der Spannposition entspricht und der dazu erforderliche Materialüberschuß in der Ausgangsposition in einem Aufnahmebereich (13) zwischen Druck- und Keilelementen aufgenommen ist.

2. Vorrichtung nach Anspruch 1, **dadurch gekennzeichnet, daß** das Abschirmmaterial (9) durch eine elektrisch leitende Folie gebildet ist.

3. Vorrichtung nach Anspruch 1, **dadurch gekennzeichnet, daß** das Abschirmmaterial (9) durch eine nicht leitende Folie mit einer elektrisch leitenden Beschichtung gebildet ist.

4. Vorrichtung nach einem der Ansprüche 1 bis 3, **dadurch gekennzeichnet, daß** das Abschirmmaterial (9) mindestens im Aufnahmebereich (13) ziehharmonikaartig gefaltet ist.

5. Vorrichtung nach einem der Ansprüche 1 bis 4, **dadurch gekennzeichnet, daß** der mittige Bereich des Abschirmmaterials (9) als Steg (14) zur Durchführung der Spannelemente (6) ausgebildet ist.

6. Vorrichtung nach einem der Ansprüche 1 bis 5, **dadurch gekennzeichnet, daß** die Teilelemente (10,11) jedes Druckelementes (4) zur Aufnahme des Abschirmmaterials (9) über Führungsstifte einander zugeordnet sind.

7. Vorrichtung nach einem der Ansprüche 1 bis 6, **dadurch gekennzeichnet, daß** die Teilelemente (10,11) des Druckelementes (4) unter Einschluß des Abschirmmaterials (9) über eine Klebeverbindung miteinander verbindbar sind.

8. Vorrichtung nach einem der Ansprüche 1 bis 7, **dadurch gekennzeichnet, daß** die außenliegende Kontaktfläche (12) der Druckelemente (4) durch das Abschirmmaterial (9) durch einseitige oder beidseitige Abwinklungen gebildet ist.

9. Vorrichtung nach einem der Ansprüche 1 bis 8, **dadurch gekennzeichnet, daß** das Abschirmmaterial (9) zusätzlich seitlich über die Druckelemente (4) hinausgeht.

## Claims

1. Device for sealing off inserted cables, lines or pipes in wall openings, particularly in the case of bulkheads and bridges on ships, with an electromagnetic screen, consisting of between the cables, lines or pipes and a stationary frame in a module-like manner by wholly or partly elastic adjusting pieces lying above and/or beside one another and having electrically conductive constructions and a gripping device which can be set and by which it is possible to set a pressure acting in the plane of the frame, which pressure holds the individual elements in the frame in a sealing manner,
**characterised in that** the gripping apparatus comprises pressure, wedging and clamping elements, for example screws (4, 5, 6), under which circumstances the distance between the pressure elements (4) can be adjusted in the plane of the frame, via corresponding guide faces (7), by wedging elements (5) which can be set perpendicularly to the said distance by the clamping elements (6), and there is disposed in the plane of the frame, between said wedging elements (5), an electrically conductive screening material (9) which is conveyed outwards via cut-open pressure elements while forming contact faces (12) on the outer sides of said pressure elements, and under which circumstances the inserted screening material (9) for forming an electromagnetic screen corresponds, in the extension of its material, to the extension of the pressure elements in the clamping position, and the excess of material necessary for that purpose in the starting position is received in a receiving region (13) between the pressure elements and wedging elements.

2. Device according to claim 1, **characterised in that** the screening material (9) is formed by an electrically conductive film.

3. Device according to claim 1, **characterised in that** the screening material (9) is formed by a non-conductive film with an electrically conductive coating.

4. Device according to one of claims 1 to 3, **characterised in that** the screening material (9) is folded in a concertina-like manner, at least in the receiving region (13).

5. Device according to one of claims 1 to 4, **characterised in that** the central region of the screening material (9) is constructed as a web (14) for the passing-through of the clamping elements (6).

6. Device according to one of claims 1 to 5, **characterised in that** the partial elements (10, 11) of each pressure element (4) are associated with one another via guide pins for the purpose of receiving the screening material (9).

7. Device according to one of claims 1 to 6, **characterised in that** the partial elements (10, 11) of the pressure element (4) can be connected to one another, with the inclusion of the screening material (9), via a bonded connection.

8. Device according to one of claims 1 to 7, **characterised in that** the externally located contact face (12) of the pressure elements (4) is formed by the screening material (9) by means of angled portions on one or both sides.

9. Device according to one of claims 1 to 8, **characterised in that** the screening material (9) additionally reaches beyond the pressure elements (4) at the sides.

## Revendications

1. Dispositif d'étanchéité pour des câbles, conduits ou tubes insérés dans des percements de paroi, en particulier dans des cloisons étanches et des ponts de navires, doté d'un blindage électromagnétique et constitué de pièces d'adaptation complètement ou partiellement élastiques disposées les unes au-dessus des autres et/ou les unes à côté des autres entre les câbles, conduits ou tubes et un cadre fixe de type modulaire, réalisés en matériaux électriquement conducteurs, et avec un dispositif ajustable de serrage qui permet d'établir une poussée qui agit dans le plan du cadre et qui maintient les éléments individuels de manière étanche dans le cadre, **caractérisé en ce que** le dispositif de serrage comporte des éléments de poussée, en biseau et de serrage, par exemple des vis (4, 5, 6), la distance entre les éléments de poussée (4) dans le plan du cadre pouvant être ajustée par l'intermédiaire de surfaces de guidage (7) correspondantes à l'aide d'éléments en biseau (5) qui peuvent être ajustés perpendiculairement à cette distance par les éléments de serrage (6), un matériau (9) de blindage électriquement conducteur étant disposé dans le plan du cadre entre les éléments en biseau (5), ce matériau étant guidé vers l'extérieur par des éléments de poussée séparés en formant des surfaces de contact (12) avec les côtés extérieurs des éléments de poussée, l'extension du matériau de blindage (9) utilisé pour former un blindage électromagnétique correspondant à l'extension des éléments de poussée dans la position de serrage et l'excédent de matériau nécessaire dans ce but dans la position initiale étant logé dans une zone de reprise (13) située entre les éléments de poussée et les éléments en biseau.

2. Dispositif selon la revendication 1, **caractérisé en ce que** le matériau de blindage (9) est formé par une feuille électriquement conductrice.

3. Dispositif selon la revendication 1, **caractérisé en ce que** le matériau de blindage (9) est formé d'une feuille non conductrice dotée d'un revêtement électriquement conducteur.

4. Dispositif selon l'une des revendications 1 à 3, **caractérisé en ce qu'**au moins dans la zone de reprise (13), le matériau de blindage (9) est replié en accordéon.

5. Dispositif selon l'une des revendications 1 à 4, **caractérisé en ce que** la zone centrale du matériau de blindage (9) est configurée comme traverse qui permet le passage des éléments de serrage (6).

6. Dispositif selon l'une des revendications 1 à 5, **caractérisé en ce que** les éléments partiels (10, 11) de chaque élément de poussée (4) sont associés l'un à l'autre par l'intermédiaire de tiges de guidage qui reprennent le matériau de blindage (9).

7. Dispositif selon l'une des revendications 1 à 6, **caractérisé en ce que** les éléments partiels (10, 11) de l'élément de poussée (4) peuvent être reliés l'un à l'autre par une liaison collée qui incorpore le matériau de blindage (9).

8. Dispositif selon l'une des revendications 1 à 7, **caractérisé en ce que** la surface extérieure de contact (12) des éléments de poussée (4) est formée par des rabats unilatéraux ou bilatéraux du matériau de blindage (9).

9. Dispositif selon l'une des revendications 1 à 8, **caractérisé en ce que** de plus, le matériau de blindage (9) déborde latéralement au-delà des éléments de poussée (4).
